# EUROPEAN PATENT APPLICATION

(11) **EP 3 738 720 A1**
(43) Date of publication of application: **18.11.2020**
(21) Application number: 19382375.4
(22) Date of filing: 13.05.2019
(51) Int. Cl.: B25J 9/00, B25J 9/08, B25J 15/00, B25J 15/04

(54) **SYSTEM FOR HANDLING ELEMENTS**

(71) Applicant: Open Mind Ventures, S.L.U., 08700 Igualada Barcelona (ES)
(72) Inventor: Balsells Mercade, Antoni, 08700 IGUALADA BARCELONA (ES); Guimerà Pedrola, Antoni, 08700 IGUALADA BARCELONA (ES); Carrer Vives, Josep Mª, 08700 IGUALADA BARCELONA (ES); Balsells Mercade, Bernat, 08700 IGUALADA BARCELONA (ES)
(74) Representative: Herrero & Asociados, S.L.

(57) **Abstract**

The system for handling elements comprises a robotic arm (1) provided with at least one tool (2) on one of the ends thereof, wherein the system for handling also comprises a support plate (10) from which a plurality of bristles (20) emerge, the ends of the bristles (20) further from the support plate (10) defining a support surface intended to receive said elements. It provides a system for handling elements which facilitates the handling thereof, meaning, the grabbing, securing, transportation, and releasing thereof.

## Description

The present invention relates to a system for handling elements of a laminar, irregular, wet, flexible etc. nature, such as fabrics, paper, vegetables, green beans, electric cables, urban waste, used beverage cans, Tetra Briks, etc.

### Background of the invention

Brushes are currently known which, duly fastened to a set of mechanical elements, form a support surface, which can be static, movable, or like an endless conveyor belt.

Said surfaces, in different industrial areas, are used to transport and/or handle elements which need to be lifted, which are difficult to handle in contact with a regular flat surface or which cannot be in contact with a rigid or continuous surface.

On the other hand, robotic systems are known which use different tools to perform different tasks. These robotic systems are very versatile, and with the specialisation of said tools they can perform the different tasks.

There are certain elements or products with an ideal form of handling which is gravitational, meaning, collected and supported by the lower portion. Within these elements we can find: laminar elements such as fabrics, cloth and plastics, flexible components and cables, very irregular objects, objects with damp surfaces, delicate leafy vegetable foods, urban waste, used beverage cans, Tetra Briks, etc.

Normally, these elements are placed on a flat surface, such that it is difficult to pick them up in an suitable manner and without damaging the support surface or the element itself.

There are also elements wherein for optimal collection, due to the features, irregular shapes, surface dirt, etc. thereof they need to be completely pierced (like a punch) enabling individual or multiple collection and unloading. This could be the case of garbage or waste.

Therefore, there is an evident need for a system for handling elements which facilitates the handling thereof, meaning, the grabbing, securing, transportation, and releasing thereof.

### Description of the invention

The mentioned drawbacks are resolved with the system for handling elements of the invention, while presenting other advantages which will be described below.

The system for handling elements according to the present invention comprises at least one robotic arm provided with at least one tool on one of the ends thereof, optimising the movements of the robotic arm in the loading and unloading operations (multi-picking), and a support plate from which a plurality of bristles emerge, the ends of the bristles further from the support plate defining a support surface intended to receive said elements.

Thanks to this feature, the handling of the elements on the support surface is simpler, since the bristles of said support surface define spaces between them for the tool of the robotic arm.

According to a preferred embodiment, said tool may comprise at least one actuator joined to the end of said robotic arm and at least one adapter removably joined to said at least one actuator, or directly to the robotic arm, for example, in the case of the adapter being only a shovel for collecting objects or a punch, or an actuator like a clamp and an adapter like fingers are required to pick up objects from underneath and press on top. The portions of the tool, the need and the arrangement thereof are variable. This variation can come from requirements of the application (for example, the movement speed in transportation) or features of the object to be handled (the surface is slippery, portions of the material are delicate, etc.).

Furthermore, said adapter joined to an actuator advantageously comprises two separate halves, and each half of the adapter preferably comprises a fixed portion and an interchangeable portion.

To further facilitate handling, said tool comprises at least one pair of projections, which are preferably arranged in at least one of said interchangeable portions.

Furthermore, the halves of said adapter are movable relative to each other, approaching and moving away relative to each other, such that the projections of both portions are also movable relative to each other in order to facilitate the securing of the elements to be handled.

According to a preferred embodiment, the set of the support plate and the bristles is a single part, for example, made of a polymer.

Furthermore, said bristles are made of a flexible material, which facilitates the introduction of the tool of the robotic arm therebetween in order to handle the elements from the lower area.

### Brief description of the drawings

To better understand what has been set forth, several drawings are joined wherein practical embodiments are schematically depicted merely by way of non-limiting example.
Figure 1 is a perspective view of a robotic arm of the system for handling elements according to the present invention;
Figure 2 is a perspective view of a brush forming a support surface of the system for handling elements according to the present invention;
Figure 3 is an elevation view of the system for handling elements of the present invention during the use thereof;
Figure 4 is a perspective view of a robotic arm of the system for handling elements according to the present invention, according to a second alternative embodiment;
Figure 5 is a perspective view of a robotic arm of the system for handling elements according to the present invention, according to a third alternative embodiment;
Figure 6 is a perspective view of the system for handling elements of the present invention during the use thereof, according to a fourth alternative embodiment; and
Figure 7 is a perspective view of the system for handling elements of the present invention during the use thereof, according to a fifth alternative embodiment.

### Description of a preferred embodiment

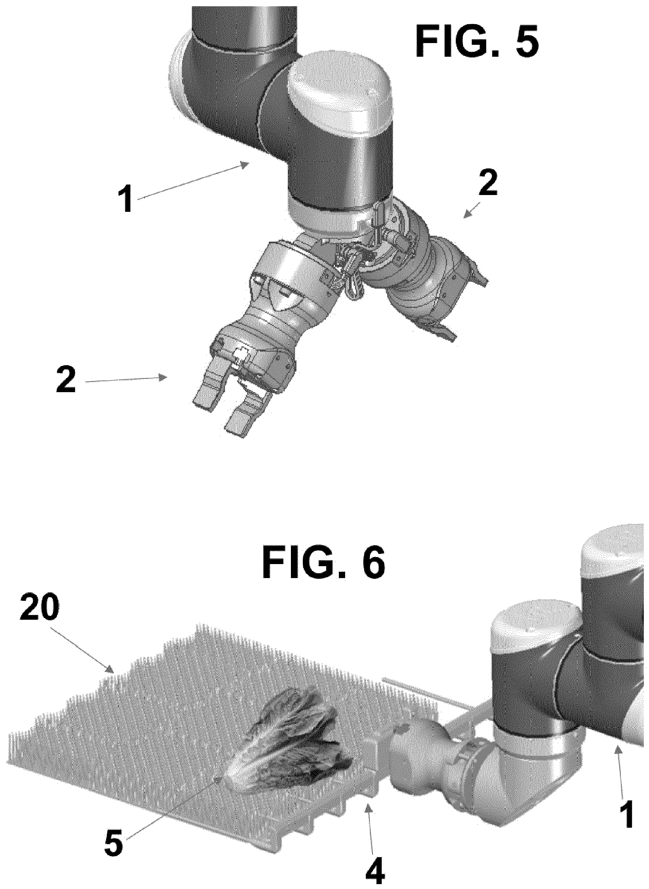

The system for exchanging adapters comprises a robotic arm 1, which on one of the ends thereof a tool is arranged, or several tools in the case of multi-picking (figure 5), generally identified by the reference number 2.

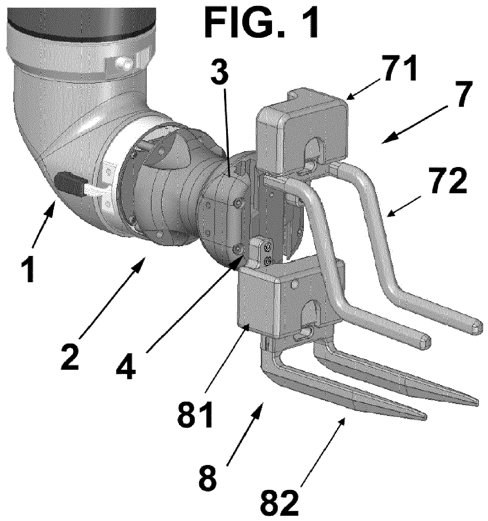

According to the embodiment shown, the tool 2 comprises an actuator 3 and at least one adapter 4. Said actuator 3 is, for example, a clamp, which is fixed to the robotic arm 1 on one of the ends thereof (figure 1).

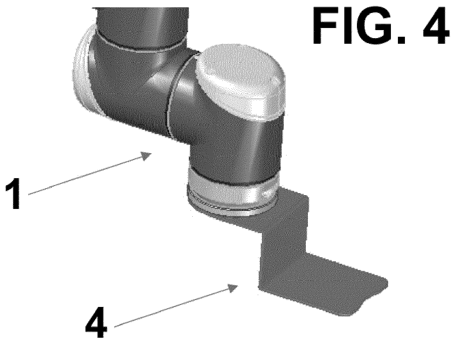

It should be noted, however, that a tool may not comprise any actuator and only one adapter (figure 4), it may comprise more than one actuator (figure 5) and it may comprise more than one adapter

Said adapter 4 is made up of two halves, an upper half 7 and a lower half 8. Each half 7, 8, in turn, is made up of two portions, a fixed portion 71, 81, fixed to the actuator, 3 and an interchangeable portion 72, 82. Said interchangeable portions 72, 82 are those which interact with the elements to be handled by the robotic arm.

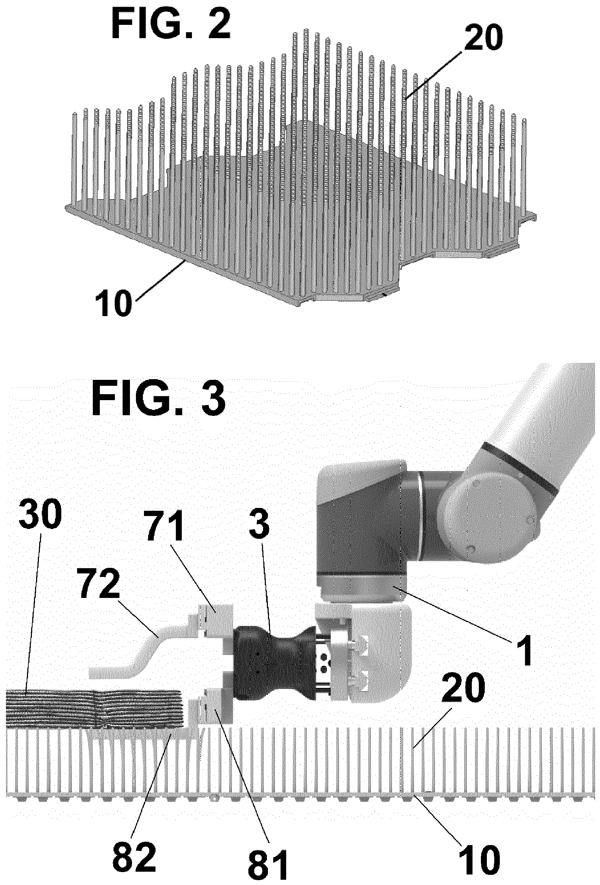

The system for handling according to the present invention also comprises a support surface preferably made up of a plurality of brushes, one of which is shown in figure 2.

The brush comprises a support plate 10 from which a plurality of flexible bristles 20 extend, in particular, they extend from an upper surface of said support plate 10.

According to a preferred embodiment, the set of the support plate 10 and the bristles 20 is a single part, for example, made of a polymer.

Said bristles 20 define the support surface for the different elements, in this case laminar ones 30, such as fabrics or papers, as shown in figure 3.

As seen in figures 1 and 3, said interchangeable portions 72, 82 comprise projections which are introduced between the bristles 20 of the brushes which make up the support surface, in this case, a conveyor belt, facilitating the handling of the laminar elements. Furthermore, since these are flexible bristles, said interchangeable portions 72, 82 can be positioned below the portions to be handled without damaging the support surface or the element to be handled, since the plurality of flexible bristles 20 is moved when the tool of the robot enters.

To facilitate the securing of the elements 30, the upper and lower halves 7, 8 of the adapter 4 are movable relative to each other, by the effects of the actuator, being able to move away and approach, thus also moving the projections of the interchangeable portions 72, 82 further away and closer.

As seen in figure 3, the space defined between the bristles 20 enables the placement of the tool 2, in particular of the projections thereof, below the lower surface of the laminar elements 30, facilitating the handling thereof.

According to an alternative embodiment shown in figure 4, the robotic arm has an adapter 4 directly coupled thereon without needing an actuator 3.

According to another alternative embodiment represented in figure 5, the robotic arm has more than one actuator 3 coupled together with the respective adapters 4 thereof, in order to perform multiple simultaneous collection tasks.

According to another alternative embodiment represented in figure 6, the robotic arm has an actuator 3 coupled together with the respective adapter 4 thereof, the design of which favours the collection of delicate objects 5 in a gravitational manner, such as for example delicate leafy vegetables.

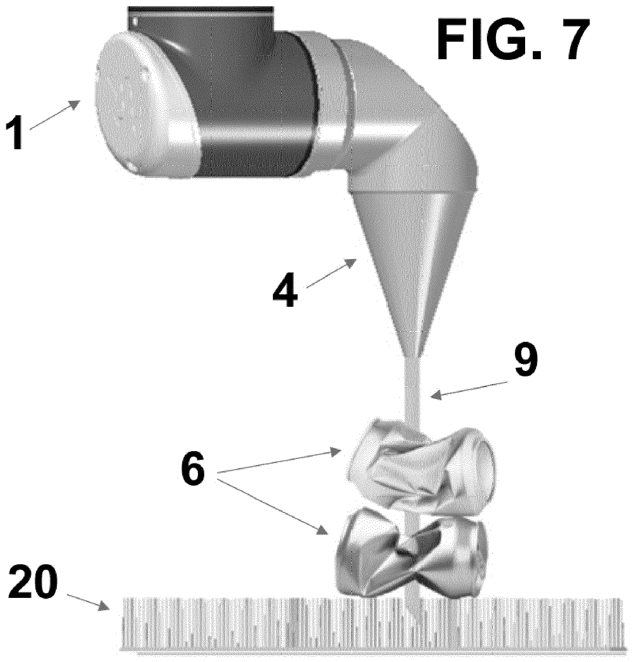

According to another alternative embodiment shown in figure 7, the robotic arm has an adapter 4 coupled thereon, the design of which incorporates a punching element 9 for collecting objects 6 suitable for being punched, such as urban waste and garbage.

Despite having referred to a specific embodiment of the invention, it is evident for a person skilled in the art that the system for handling which has been described is susceptible to a number of variations and modifications, and which all the mentioned details can be replaced with other technically equivalent ones without departing from the scope of protection defined by the attached claims.

## Claims

1. A system for handling elements, comprising a robotic arm (1) provided with at least one tool (2) on one of the ends thereof, **characterised in that** the system for handling also comprises a support plate (10) from which a plurality of bristles (20) emerge, the ends of the bristles (20) further from the support plate (10) defining a support surface intended to receive said elements.

2. The system for handling elements according to claim 1, wherein said tool (2) comprises at least one actuator (3) joined to the end of said robot arm (1) and at least one adapter (4) removably joined to said at least one actuator (3).

3. The system for handling elements according to claim 1, wherein said at least one adapter (4) comprise two separate halves (7, 8).

4. The system for handling elements according to claim 3, wherein each half (7, 8) of the adapter (4) comprises a fixed portion (71, 81) and an interchangeable portion (72, 82).

5. The system for handling elements according to claim 1, wherein said tool (2) comprises at least one projection.

6. The system for handling elements according to claims 4 and 5, wherein said projections are arranged in at least one of said interchangeable portions (72, 82).

7. The system for handling elements according to claims 3 or 4, wherein the halves (7, 8) of said adapter (4) are movable relative to each other, approaching and moving away relative to each other.

8. The system for handling elements according to claim 1, wherein the set of the support plate (10) and the bristles (20) is a single part.

9. The system for handling elements according to claim 8, wherein said set of the support plate (10) and the bristles (20) is made of a polymer.

10. The system for handling elements according to claims 1 or 9, wherein said bristles (20) are made of a flexible material.

11. The system for handling elements according to claim 1, wherein said tool (2) comprises at least one adapter (4) joined to the end of said robotic arm (1) and at least one punching element (9) removably joined to said at least one adapter (4).
